# EUROPEAN PATENT APPLICATION

(11) **EP 0 799 735 A1**
(43) Date of publication of application: **08.10.1997**
(21) Application number: 97301310.5
(22) Date of filing: 27.02.1997
(51) Int. Cl.: B60J 10/00, B60J 10/04

(54) **Sealing and guiding strips**

(30) Priority: 03.04.1996 GB 9607050
(71) Applicant: DRAFTEX INDUSTRIES LIMITED, Edinburgh EH3 6YY, Scotland (GB)
(72) Inventor: Andrzejewski, Heinz, 41749 Viersen (DE)
(74) Representative: Foster, David Martyn

(57) **Abstract**

A window sealing and guiding channel (18) for a window frame (12) carried by a vehicle door is arranged to match the sharp angle at the corner (16) of the frame (12). A distal lip (28) of the wall of the channel (18) on the inside of the window is severed from the remainder of the channel side wall (24) from a point (U) on one side of the sharp corner (16), through the sharp corner (16) to the end of the channel, and this lip (28) is bent into a smooth curve (A) to bridge across the sharp corner. The lip (30) on the other channel side wall (26) is also severed from the remainder of its side wall at the sharp corner (16). In addition, the lip (30) of this side wall is cut through to form a mitred joint matching the angle at the sharp corner (16). The remainder of the channel (18) is removed at the sharp corner and replaced by a previously moulded insert having a channel-form at the sharp corner and an extended wall portion (24A) filling the gap where the inner lip (28) bridges across the corner.

## Description

The invention relates to a window sealing and guiding channel for a window opening having a sharp corner, comprising a channel base and first and second integral channel side walls made of flexible material, each side wall having a lip extending along its distal edge, the channel being formed to match the sharp corner and being connected with a portion of the flexible material which smoothly bridges across the sharp corner.

Such a channel is known from GB-A-2 285 471. In this case, however, the portion which smoothly bridges across the sharp corner is both produced and attached to the remainder of the channel by an *in situ* moulding operation. Such an *in situ* moulding operation can be difficult to carry out. The invention is concerned with avoiding this problem.

According to the invention, therefore, the known window channel is characterised in that the lip on the first side wall is separated from that side wall over a region extending along a part of the channel matching the sharp corner, the separated lip forming part of the portion smoothly bridging across the sharp corner, the lip on the second side wall is separated from that side wall at the corner and formed to match the sharp angle, and a previously produced insert is adhesively secured between the separated lip of the first side wall and the remainder of that side wall over the said region.

Sealing and guiding strips for windows in motor vehicle bodies, and embodying the invention, will now be described, by way of example only, with reference to the accompanying diagrammatic drawings in which:
Figure 1 is a side view of a vehicle door;
Figure 2 is an enlarged view of the area II of Figure 1, showing one of the sealing and guiding strips;
Figure 3 is a section on the line III-III of Figure 2;
Figure 4 is a section on the line IV-IV of Figure 2 but with the window frame omitted;
Figure 5 is a section on the line V-V of Figure 2, but with the window frame omitted;
Figure 6 is a section on the line VI-VI of Figure 2 but with the window frame omitted;
Figure 7 is a perspective view of the window frame and sealing strip and corresponding to Figure 2; and
Figure 8 is a perspective view of a moulded insert used in the strip.

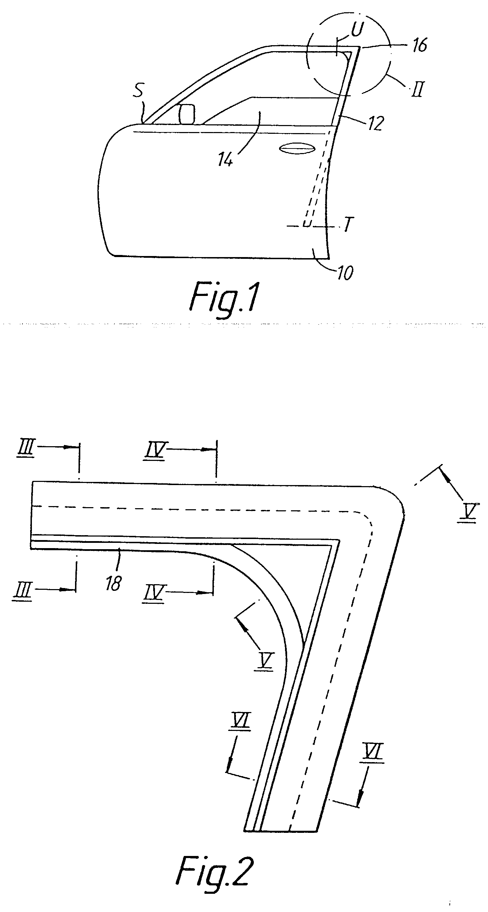

Figure 1 shows a vehicle door 10 carrying a window frame 12. A pane of window glass 14 is slidable in a vertical direction in the window frame 12 and can be raised from and lowered into the lower part of the door 10. The window frame 12 is produced from metal or other stiff material and is formed to produce a sharp corner 16.

In a manner to be explained in more detail below, the window frame 12 is of channel-shape in cross-section and supports a sealing and guiding strip 18 produced from flexible material such as plastics or rubber and in which the window glass 14 slides. The sealing and guiding channel 18 is designed to provide a weather-proof seal for the edge of the window glass and also to impose low friction on the movement of the glass.

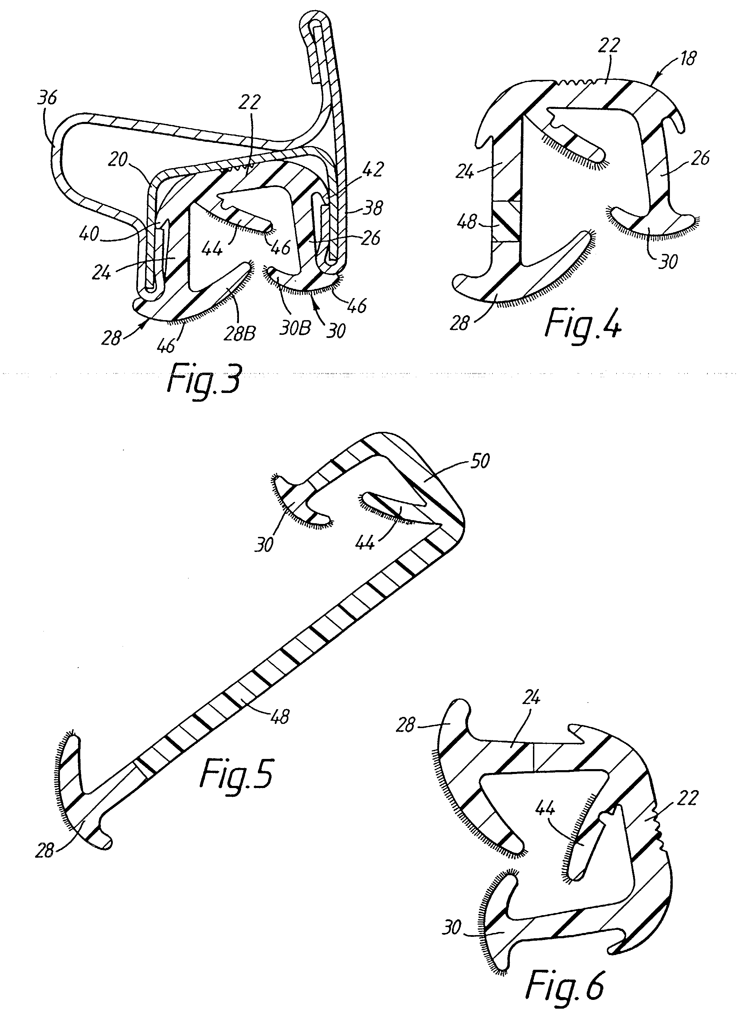

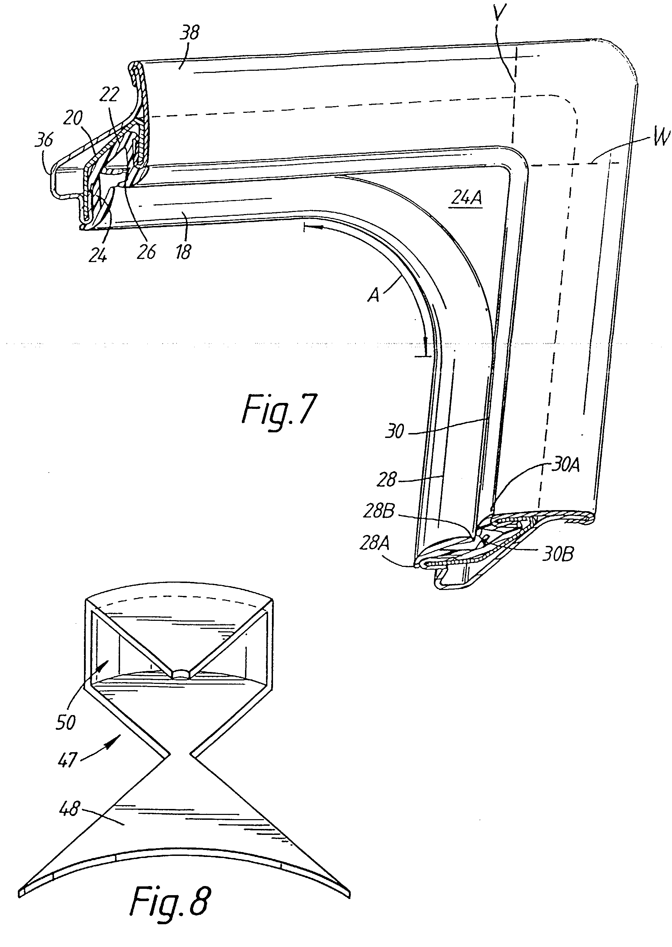

Figures 2 and 7 show, to an enlarged scale, the window frame 12 and the sealing and guiding channel 18 in the region II of Figure 1. The window frame 12, which will be described in more detail with reference to Figures 3 - 6, defines a stiff mounting channel 20 (Fig. 7) in which is supported the sealing and guiding channel 18. The channel 18 has a base 22 and side walls 24 and 26. Each of these side walls 24,26 terminates in a respective lip 28,30, the lips having portions 28A and 30A which overlap the respective distal edges of the side walls of the mounting channel 20, and portions 28B and 30B which extend partway across the mouth of the sealing and guiding channel 18.

As shown most clearly in Figure 7, the longitudinal extension of the lip 30 matches the sharp corner 16 of the window frame 12. However, the longitudinal extension of the lip 28 is shaped differently and bridges across the sharp corner 16 in a smooth radius, as indicated over the region A in Figure 7. At the region A, the side wall 24 has to be extended, of course, as indicated at 24A. The smooth radius region A is positioned on the inside of the window glass 14.

The channel 18 is produced by an extrusion process from plastics or rubber.

Figure 3 shows a cross-section through the extruded channel 18 at the line III-III of Figure 2. Figure 3 also shows the window frame 12 in more detail.

As shown in Figure 3, the window frame 12 comprises channel-shaped metal producing the mounting channel 20, a frame member 36 supporting the channel 20, and an outer trim strip 38. The latter is bent to attach it to one of the walls of the mounting channel 20 and to one of the edges of the outer frame member 36. The latter is bent over the opposite distal edge of the mounting channel 20.

The window channel 18 defines shoulders 40 and 42 on the outsides of the side walls 24,26 and positioned near the base 22 of the channel. These shoulders 40,42 engage the distal edges of the bent-over parts of the outer frame member 36 and the trim member 38 and thus locate the window channel 18 securely in position.

Figure 3 also shows that the window channel 18 includes a lip 44 at the base of the channel against which the edge of the window glass abuts when the window is fully closed. The outwardly facing surface of the lip 44 is covered with flock 46 to provide improved sealing and low friction. As the window glass enters the channel, the lip surfaces 28B and 30B are bent inwardly to allow passage of the window glass. The surfaces of the lip portions 28B and 30B which contact the glass are also covered with the flock 46.

The channel 18 is produced to have the cross-section shown in Figure 3 and a length equal to that from points S and T in Figure 1. However, after the extrusion process, a cut is made through the side wall 24 of the channel to sever the lip 28 from the remainder of the side wall. This cut starts at the point U in Figure 1 and continues to the end T of the channel. It will be appreciated that, although the start and end points of this cut are indicated on Figure 1, the cut is in fact made before the channel 18 is mounted on the frame. In addition, the channel base 22 and the side wall 26 are cut away over a part of the channel shown in Figure 3 between the dotted lines V and W. A previously moulded insert 47 (Figure 8) is then placed in position as will now be described. This insert produces the required sharp corner in the channel wall 26 and the required extended side wall 24A over the region A.

Before the moulded insert is placed in position, the channel is bent to match the sharp corner in the window frame. At the apex of the corner, the only part of the channel which actually exists at this time are the lip 30, which is sharply bent as shown in Figure 7, and the lip 28 which is smoothly bent to bridge across the corner, also as shown in Figure 7. If desired, the lip 30 may be mitre-cut at the sharp corner, the two cut ends then being adhesively secured together to form the sharp corner.

Figure 4 shows a section through the channel 18 at a position after the beginning U of the cut. As shown in Figure 4, the side wall 24 has been cut through and a moulded portion 48 of the insert 47 has been inserted. The moulded portion 48 provides the desired increase in the length of the side wall 24.

The moulded portion 48 smoothly increases in size towards the corner 16, thus progressively increasing the length of the side wall 24 as shown in Figure 8 and thereby producing the extended side wall portion 24A.

As shown in Figure 8, the moulded portion 48 merges with a channel-shaped moulded portion 50 which is also shown in Figure 5, being a cross-section at the corner 16.

At the line VI-VI of Figure 2, the moulded insert 47 no longer exists, and the separated parts of the side wall 24 are simply secured together again as shown in Figure 6 - and this is continued to the end T of the channel 18.

In this way, the sealing and guiding channel 18 can be given a sharp radius to match the sharp corner 16 of the frame on the outside of the window and a smooth radius on the inside of the window. Because the insert 47 is produced separately by a moulding operation and then secured to the mounted channel 18 merely by adhesive, rather than being moulded *in situ* into the window channel 18, no excessive heat is applied to the channel 18 - which might otherwise damage it and its flocked layers.

The side wall 24 has to be severed along the whole of the length between points U and T because the effect of the smooth radius for the lip 28, over the region A, means that the lip 28 follows a shorter path than the lip 30; the latter of course follows the sharp corner 16. The excess length of the lip 28 can therefore be cut off at the end of the channel T.

Instead, of course, the start U of the cut could be made at or near the position of the line VI-VI of Figure 2 and the cut extended in the opposite direction along the channel 18, that is, to the position S as indicated in Figure 1.

## Claims

1. A window sealing and guiding channel for a window opening having a sharp corner (16), comprising a channel base (22) and first and second integral channel side walls (24,26) made of flexible material, each side wall (24,26) having a lip (28,30) extending along its distal edge, the channel being formed to match the sharp corner (16) and being connected with a portion (28) of the flexible material which smoothly bridges across the sharp corner, characterised in that the lip (28) on the first side wall (24) is separated from that side wall (24) over a region extending along a part of the channel matching the sharp corner, the separated lip (28) forming part of the portion smoothly bridging across the sharp corner, the lip (30) on the second side wall (26) is separated from that side wall (26) at the corner and formed to match the sharp angle, and a previously produced insert (47) is adhesively secured between the separated lip (24) of the first side wall (24) and the remainder of that side wall over the said region.

2. A channel according to claim 1, characterised in that the lip (30) on the second side wall (26) is mitre-cut at the corner and the cut ends joined to form a mitre-joint at the sharp angle.

3. A channel according to claim 1 or 2, characterised in that the side walls (24,26) and the base (22) are removed at the sharp corner and replaced by corresponding parts of and integral with the said insert (47), the corresponding parts being adhesively secured in position in the channel.

4. A channel according to claim 3, characterised in that: the first side wall (24) is cut through to separate a distal edge portion including the respective lip (28) from the remainder of the first side wall (24), the cut extending along the length of the side wall from a first position on one side of the sharp corner, through the sharp corner and thence to an end of the channel; the insert (47) has a size which from the said first position to the sharp corner progressively increases the spacing between the distal edge portion of the first side wall (24) and the remainder thereof and thereafter progressively decreases that spacing to zero at a second position on the opposite side of the sharp corner to the first position; the distal edge portion and the remainder of the first side wall (24) are adhesively secured together along the length of the channel extending from the said second position to the said end of the channel; and the remainder of the first side wall (24) and the remainder of the second side wall (26) and the base (22) of the channel are removed at the sharp corner and replaced by a moulded channel part integrally moulded with the insert (47).

5. A channel according to any one of claims 1 to 3, characterised in that the lip (28) of the said first side wall (24) is separated from that side wall (24) not only over the said region but also to an end of the channel, the separated lip (28) being adhesively re-secured to the first side wall (24) outside the said region.

6. A channel according to any preceding claim, characterised in that the insert is a moulded insert (47).

7. A channel according to any preceding claim, characterised in that the channel base (22), side walls (24,26) and lips (28,30) are produced by extrusion.

8. A channel according to any preceding claim, characterised in that the respective lips (28,30) partially extend across the mouth of the channel for contacting and sealing against opposite sides of the window glass.

9. A channel according to any preceding claim, characterised by a lip (44) within the channel and incliningly extending from the base (22) thereof for engaging an edge of the window glass.

10. A channel according to any preceding claim, characterised in that the window glass is a slidable window glass in a motor vehicle.

11. A window channel according to claim 10, characterised in that it is mounted in a rigid frame carried by the door of the motor vehicle.
